# EUROPEAN PATENT APPLICATION

(11) **EP 4 712 005 A1**
(43) Date of publication of application: **18.03.2026**
(21) Application number: 24802573.6
(22) Date of filing: 29.02.2024
(51) Int. Cl.: G06Q 30/0601, G06Q 50/00, G06F 16/9532

(54) **OBJECT PUBLISHING METHOD, COMPUTER-READABLE STORAGE MEDIUM, AND COMPUTER DEVICE**

(30) Priority: 11.05.2023 CN 202310536955
(71) Applicant: Hangzhou Alibaba International Internet Industry Co., Ltd., Hangzhou, Zhejiang 310056 (CN)
(72) Inventor: WANG, Chunfei, Hangzhou, Zhejiang 310052 (CN); MA, Kunle, Hangzhou, Zhejiang 310052 (CN); GAO, Peng, Hangzhou, Zhejiang 310052 (CN); YU, Xiaofeng, Hangzhou, Zhejiang 310052 (CN)
(74) Representative: Wu, Ting
(86) International application number: PCT/CN2024/079462
(87) International publication number: WO 2024/230285

(57) **Abstract**

An object publishing method, a computer-readable storage medium, and a computer device are provided. The method includes: receiving a publishing request for a publishing material corresponding to a target object, the publishing request being sent by a user client of a source platform where the target object is located; wherein the publishing material corresponding to the target object is obtained by combining at least one multimedia material according to a preset template, the at least one multimedia material corresponds to the target object, and the preset template is determined based on a publishing theme corresponding to the target object; obtaining a social platform account bound to a current login account of the user client; and in response to the publishing request, publishing the publishing material corresponding to the target object to the social platform account.

## Description

### CROSS -REFERENCE TO RELATED APPLICATION

This application claims priority to Chinese Patent Application No. 202310536955.8, filed with the China National Intellectual Property Administration on May 11, 2023, titled "Object Publishing Method, Computer-Readable Storage Medium, and Computer Device," the entire contents of which are incorporated herein by reference.

### TECHNICAL FIELD

The present disclosure relates to the field of internet technologies, and in particular, to an object publishing method, a computer-readable storage medium, and a computer device.

### BACKGROUND

Currently, a user can publish information about a target object from a source platform to a social platform. However, during publishing, the user needs to log in to a social platform account and, after successful login, upload publishing material corresponding to the target object on the social platform. However, this method has high operational complexity and low publishing efficiency.

### SUMMARY

In a first aspect, an embodiment of the present application provides an object publishing method, the method including: receiving a publishing request for a publishing material corresponding to the target object, the publishing request being sent by a user client of a source platform where the target object is located; wherein the publishing material corresponding to the target object is obtained by combining at least one multimedia material according to a preset template, the at least one multimedia material corresponds to the target object, and the preset template is determined based on a publishing theme corresponding to the target object; obtaining a social platform account bound to a current login account of the user client; and in response to the publishing request, publishing the publishing material corresponding to the target object to the social platform account.

In a second aspect, an embodiment of the present application provides a computer-readable storage medium, on which a computer program is stored, wherein the program, when executed by a processor, implements the method according to any embodiment of the present disclosure.

In a third aspect, an embodiment of the present application provides a computer device, including a memory, a processor, and a computer program stored on the memory and executable by the processor, wherein the processor, when executing the program, implements the method according to any embodiment of the present disclosure.

In embodiments of the present disclosure, a source platform can use a preset template to combine at least one multimedia material corresponding to a target object to obtain a publishing material corresponding to the target object. In this way, a user client of the source platform only needs to pre-establish a binding relationship between a current login account and a social platform account and send a publishing request for the publishing material corresponding to the target object to the source platform. The source platform can then publish the publishing material corresponding to the target object to the social platform account based on the binding relationship. The foregoing solution achieves one-click binding for the publishing material corresponding to the target object, eliminating the need for the user to perform operations such as logging into the social platform account and uploading the publishing material on the social platform, thereby reducing the user's operational complexity and improving publishing efficiency.

It should be understood that the foregoing general description and the following detailed description are merely exemplary and explanatory and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the technical solutions of the present disclosure.
FIG. 1A, FIG. 1B, and FIG. 1C are schematic diagrams of an object publishing process in the related art.
FIG. 2 is a flowchart of an object publishing method according to an embodiment of the present disclosure.
FIG. 3, FIG. 4, and FIG. 5 are schematic diagrams of candidate publishing themes and corresponding preset templates according to an embodiment of the present disclosure.
FIG. 6 is a schematic diagram of a search interface for a target object according to an embodiment of the present disclosure.
FIG. 7 is a schematic diagram of search results for a target object according to an embodiment of the present disclosure.
FIG. 8 is a schematic diagram of a plurality of candidate publishing materials corresponding to a target object according to an embodiment of the present disclosure.
FIG. 9 is a schematic diagram of an account binding interface according to an embodiment of the present disclosure.
FIG. 10 is a schematic diagram of an editing interface for a publishing material according to an embodiment of the present disclosure.
FIG. 11 is a schematic diagram of an interface for viewing a legal agreement according to an embodiment of the present disclosure.
FIG. 12 is a schematic diagram of a list of bound social platform accounts according to an embodiment of the present disclosure.
FIG. 13, FIG. 14, and FIG. 15 are schematic diagrams of information displayed on a user client according to an embodiment of the present disclosure.
FIG. 16 is a schematic diagram of a video publishing interface according to an embodiment of the present disclosure.
FIG. 17 is an overall flowchart according to an embodiment of the present disclosure.
FIG. 18 and FIG. 19 are schematic diagrams of functional modules according to an embodiment of the present disclosure.
FIG. 20 is a schematic diagram of a preparation process of a publishing material according to an embodiment of the present disclosure.
FIG. 21 is a schematic diagram of an interaction process between a source platform and a social platform according to an embodiment of the present disclosure.
FIG. 22 is a flowchart for obtaining a publishing record according to an embodiment of the present disclosure.
FIG. 23 is a schematic diagram of a query and signing process for a legal agreement according to an embodiment of the present disclosure.
FIG. 24 is a schematic diagram of a query process for a bound account according to an embodiment of the present disclosure.
FIG. 25 is a schematic diagram of a computer device according to an embodiment of the present disclosure.

### DETAILED DESCRIPTION OF THE EMBODIMENTS

Exemplary embodiments will be described in detail herein, with examples thereof illustrated in the accompanying drawings. When the following description refers to the accompanying drawings, unless otherwise indicated, the same numbers in different drawings represent the same or similar elements. The implementations described in the following exemplary embodiments do not represent all implementations consistent with the present disclosure. Instead, they are merely examples of apparatuses and methods consistent with some aspects of the present disclosure as detailed in the appended claims.

The terminology used in the present disclosure is for the purpose of describing particular embodiments only and is not intended to be limiting of the present disclosure. The singular forms "a," "the," and "said" as used in the present disclosure and the appended claims are also intended to include the plural forms unless the context clearly indicates otherwise. It should also be understood that the term "and/or" as used herein refers to and includes any and all possible combinations of one or more of the associated listed items. In addition, the term "at least one" as used herein refers to any one of a plurality of items or any combination of at least two of the plurality of items.

It should be understood that although the terms first, second, third, etc., may be used in the present disclosure to describe various information, such information should not be limited to these terms. These terms are only used to distinguish one type of information from another. For example, without departing from the scope of the present disclosure, first information could also be called second information, and similarly, second information could also be called first information. Depending on the context, the word "if' as used herein may be interpreted as "when" or "upon" or "in response to determining."

To enable those skilled in the art to better understand the technical solutions in the embodiments of the present disclosure, and to make the above-mentioned objects, features, and advantages of the embodiments of the present disclosure more apparent and understandable, the technical solutions in the embodiments of the present disclosure will be further described in detail below with reference to the accompanying drawings.

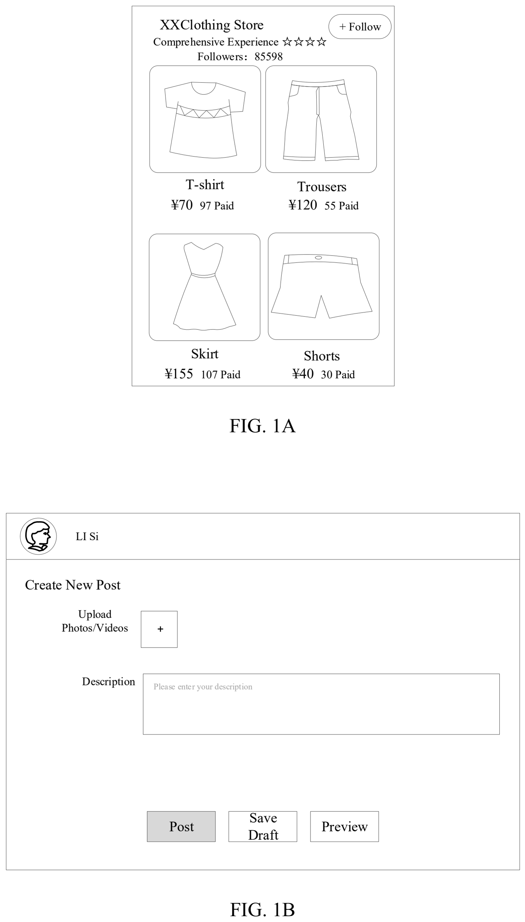

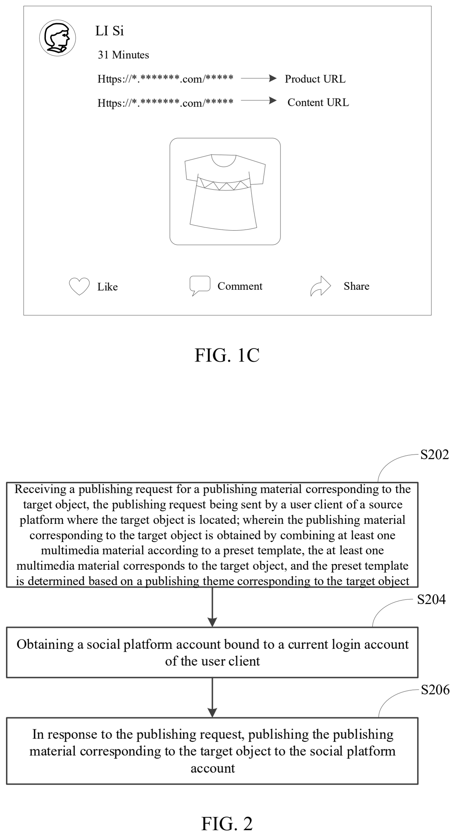

In practical applications, it is often needed to publish information about a target object from a source platform where the target object is located to a social platform, in order to bring more traffic to the source platform through the social platform. Users of the social platform can perform interactive behaviors such as browsing, liking, commenting, and forwarding the information of the target object published on the social platform. FIG. 1A, FIG. 1B, and FIG. 1C exemplarily show an embodiment where the source platform is an e-commerce platform and the target object is a product sold by a merchant on the e-commerce platform. As shown in FIG. 1A, "XX Clothing Store" is a merchant on an e-commerce platform, and the merchant sells products such as T-shirts, long pants, skirts, and shorts. The owner of the merchant wishes to publish the products sold in their store to a social platform. FIG. 1B shows the process of publishing a product on the social platform. In this process, the owner needs to first log in to a social platform account (as shown by "Li Si" in the figure), then click a control for adding a picture/video on a publishing interface to upload a picture or video of the product, enter descriptive information for the product in a text description column, and then click a "Publish" control to publish. As shown in FIG. 1C, the published content can include a product link, an address of the published content, and a picture or video of the product. It can be seen that the entire process requires the user to perform relatively cumbersome operations, resulting in high operational complexity and low publishing efficiency. And this is just the operational process on one social platform. When it is necessary to publish the product to multiple social platforms, or to multiple social platform accounts on the same social platform, the operational complexity will be further increased, and the publishing efficiency will be further reduced.

Based on this, an embodiment of the present disclosure provides an object publishing method, as shown in FIG. 2, the method including:
Step S202: receiving a publishing request for a publishing material corresponding to the target object, the publishing request being sent by a user client of a source platform where the target object is located; wherein the publishing material corresponding to the target object is obtained by combining at least one multimedia material according to a preset template, the at least one multimedia material corresponds to the target object, and the preset template is determined based on a publishing theme corresponding to the target object;
Step S204: obtaining a social platform account bound to a current login account of the user client;
Step S206: in response to the publishing request, publishing the publishing material corresponding to the target object to the social platform account.

In step S202, the source platform may be an e-commerce platform such as Taobao, Alibaba.com, JD.com, Amazon, etc., and the target object may be a product sold by a merchant on the e-commerce platform, for example, clothing, food, books, etc. Alternatively, the source platform may be a Q&A platform such as Quora, Zhihu, etc., and the target object may be an article published by a user on the Q&A platform. Alternatively, the source platform may also be a news platform such as The Paper, NetEase News, etc., and the target object may be news published on the news platform. Alternatively, the source platform may also be a short video platform such as Douyin, Kuaishou, etc., and the target object may be a video published on the short video platform. For ease of understanding, the following description uses an e-commerce platform as the source platform and a product sold on the e-commerce platform as the target object as an example.

The user client of the source platform may be an application or a browser installed on a mobile terminal or a personal computer (PC). The user client can send a publishing request for a publishing material corresponding to a target object to the source platform. The publishing request may carry identification information of the target object, for example, an ID of the target object and/or a name of the target object, etc. The publishing material corresponding to the target object may include a link address for browsing information of the target object. After the target object is published to a social platform, users of the social platform can interact with the publishing material to browse the information of the target object at the link address, thereby attracting public domain traffic to the source platform. The information of the target object includes, but is not limited to, at least one of an ID, a name, a price, discount information, a picture, a video, a place of origin, a category, a historical number of viewers, a historical number of views, historical sales records, or historical comment information of the target object.

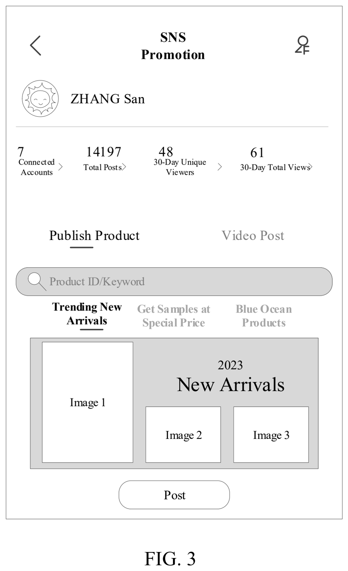

In some embodiments, the publishing material corresponding to the target object is obtained by combining at least one multimedia material corresponding to the target object according to a preset template, and the preset template is determined based on a publishing theme corresponding to the target object. The publishing theme corresponding to the target object can be selected from at least one candidate publishing theme predefined by the source platform. The source platform can define different candidate publishing themes in different time periods. Taking an e-commerce platform as the source platform as an example, a "Double Eleven Grand Promotion" candidate publishing theme can be defined during the Double Eleven period, and a "20 off for every 200 spent" candidate publishing theme can be defined during the New Year's Day period. In addition, the source platform can also define one or more fixed candidate publishing themes, for example, "New Trends," "Low-Price Samples," and "Industry Blue Ocean Products" as shown in FIG. 3. In some embodiments, the candidate publishing themes can be defined based on user preferences and the conversion effects of different publishing themes.

The multimedia material may include text information, pictures, audio, videos, and/or animations, etc. The multimedia material corresponding to the target object may be a multimedia material pre-uploaded by the user client (referred to as a first multimedia material), for example, at least one picture and/or video of the target object. The first multimedia material can be uploaded to the source platform by a user of the source platform when publishing the target object to the source platform, to display the visual effect or usage of the target object, help users of the source platform understand the information conveyed by the target object, and increase engagement and interaction. When publishing the publishing material corresponding to the target object to the social platform, the picture or video uploaded by the user can be directly used to generate the publishing material. This way, the user does not need to upload the multimedia material required to generate the publishing material again, thereby further reducing the user's operational complexity and improving publishing efficiency.

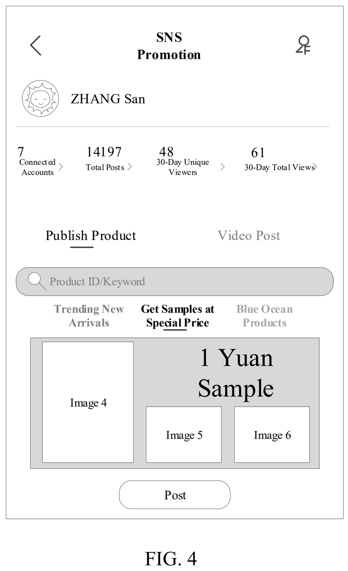

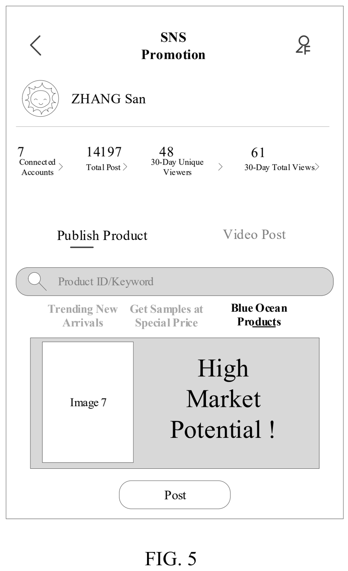

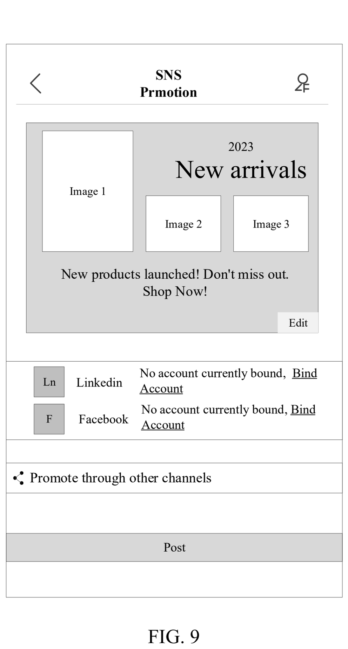

The multimedia material corresponding to the target object may also include a multimedia material generated based on preset information such as the publishing theme corresponding to the target object, the current time, and/or location information of the user client of the source platform (referred to as a second multimedia material). The second multimedia material may include text information such as a title of the target object and/or a description of the target object. The aforementioned text information can be pre-generated and stored by the source platform. As shown in FIG. 3, a title of the target object "2023 New Arrivals" can be generated based on the publishing theme corresponding to the target object and the current time. As shown in FIG. 9, a description of the target object "New arrivals, don't miss out, click for details!" can be generated based on the publishing theme corresponding to the target object. As shown in FIG. 4 and FIG. 5, a title of the target object "1 Yuan Sample" or "High Market Potential" can also be generated based only on the publishing theme corresponding to the target object. In addition to the situations shown in the figures, a title of the target object can also be generated based on the publishing theme, the current time, and the location information of the user client of the source platform, for example, "2023 Sales Champion in XX Region."

The publishing material corresponding to the target object can be obtained by combining a plurality of multimedia materials of the same type or at least two multimedia materials of different categories according to a preset template. For example, when the multimedia material includes pictures, a plurality of pictures can be combined according to a preset template to obtain the publishing material corresponding to the target object. As another example, referring to FIG. 3 to FIG. 5, when the multimedia material includes pictures and text, at least one picture and text information can be combined according to a preset template to obtain the publishing material corresponding to the target object. The dimensions and positions of each multimedia material can be predefined through the preset template. For example, in the embodiment shown in FIG. 3, picture one is located at the far left of the preset template and has the largest size, picture two and picture three are located at the lower right of the preset template, and the text information "2023 New Arrivals" is located at the upper right of the preset template.

The preset template can be determined based on the publishing theme corresponding to the target object. The preset template can have a one-to-one correspondence with the publishing themes predefined by the source platform. Different publishing themes correspond to different preset templates, and different preset templates may include different types and/or arrangements of multimedia materials. For example, referring to FIG. 3 and FIG. 4, the content of the text information in different preset templates can be different. Referring to FIG. 3 and FIG. 5, the number of pictures, the content of the text information, the arrangement of pictures and text information, etc., in different preset templates can all be different.

In some embodiments, the preset templates can be pre-stored in a template library of the source platform. After receiving a publishing request, the source platform can call the corresponding preset template from the template library based on the publishing theme corresponding to the target object. The preset template may include one or more elements and attribute values corresponding to each element, and each element corresponds to one type of multimedia material. For example, the elements in the preset template may include text information and at least one picture. The attribute values corresponding to the text information include the color, font size, font type, position, and/or content of the text information. The attribute values corresponding to each picture include the size, position, and/or transparency of that picture. The source platform can crop and scale the pictures of the target object according to the attribute values corresponding to each picture in the preset template, and splice them into the corresponding positions in the preset template. It can also set the attribute values corresponding to the text information in the preset template, thereby obtaining the publishing material corresponding to the target object.

In the above embodiments, after receiving the publishing request, the source platform can directly combine at least one multimedia material corresponding to the target object based on the preset template to obtain the publishing material corresponding to the target object, without requiring the user to manually upload various multimedia materials during publishing, thereby reducing the operational complexity of the publishing process and improving publishing efficiency. Furthermore, the preset template can be designed by a designer based on the publishing theme, which can improve the aesthetic appeal of the publishing material.

In some embodiments, at least one candidate publishing theme can be displayed on an interface of the user client of the source platform. Under each candidate publishing theme, a publishing material corresponding to at least one object to be published can be displayed. The target object can be selected from the at least one object to be published, and the publishing material corresponding to the target object is the publishing material corresponding to the selected object to be published. As shown in FIG. 3 to FIG. 5, the candidate publishing themes may include "New Trends," "Low-Price Samples," and "Industry Blue Ocean Products." Under each of these three candidate publishing themes, a publishing material corresponding to at least one object to be published can be included. The publishing material corresponding to the object to be published is displayed under the corresponding candidate publishing theme based on information of the object to be published. Specifically, the source platform can identify the information of the object to be published, match the information of the object to be published with each candidate publishing theme respectively, and determine the publishing theme corresponding to the object to be published from the at least one candidate publishing theme based on the matching results.

For example, the information of the object to be published includes a launch time of the object to be published on the source platform. When the information of the object to be published includes the launch time of the object to be published, if a time interval between the launch time of the object to be published and a current time is within a preset range, the publishing theme corresponding to the object to be published can be determined as "New Trends." As another example, the information of the object to be published includes a price of the object to be published. If the price of the object to be published is lower than a preset price threshold, the publishing theme corresponding to the object to be published can be determined as "Low-Price Samples." As yet another example, the information of the object to be published includes category information of the object to be published. If the object to be published belongs to a preset category, the publishing theme corresponding to the object to be published can be determined as "Industry Blue Ocean Products."

Referring to FIG. 3 to FIG. 5, the publishing material corresponding to each object to be published corresponds to a publishing control on the interface of the user client (as shown by "Publish" in the figures). By operating the publishing control, the corresponding publishing material can be published. For example, below the publishing material corresponding to the object to be published "T-shirt," there is a corresponding publishing control. By clicking this publishing control on the user client, the user can determine the publishing material corresponding to the object to be published "T-shirt" as the publishing material corresponding to the target object and publish it.

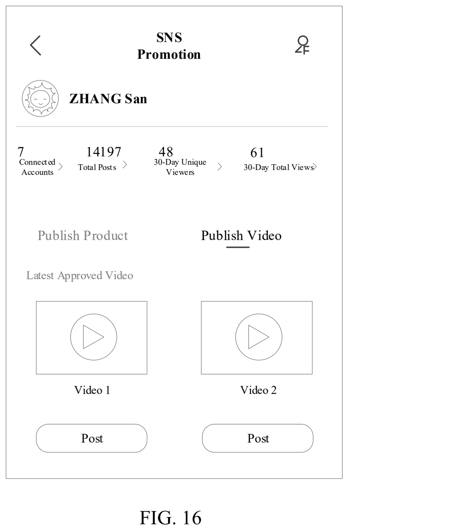

In addition to publishing materials that include pictures, it is also possible to publish materials that include videos, as shown in FIG. 16. Specifically, one or more videos pre-uploaded by the user to the source platform can be displayed on the user client. These videos can be videos that have been reviewed and approved by the source platform and are stored in a video library of the source platform. The video library can display information such as a video title, a preview image, a video duration, and/or a video level (e.g., classified based on video clarity to represent video quality). The user can select one of these videos to generate a publishing material. The publishing material can include the video's title, a thumbnail, text information, a link address, etc.

The above method shows an embodiment where the source platform automatically classifies an object to be published under a corresponding candidate publishing theme based on information of the object to be published and generates a publishing material corresponding to that candidate publishing theme. However, some objects to be published may not match any of the candidate publishing themes. Therefore, based on the above method, it is generally only possible to generate publishing materials corresponding to some of the objects to be published. In this case, a search for the target object can be performed based on search information sent by the user client. If a publishing material corresponding to the searched target object is not included in any candidate publishing theme, a plurality of candidate publishing materials are generated for the target object, where different candidate publishing materials correspond to different publishing themes. The candidate publishing material selected by the user client is determined as the publishing material corresponding to the target object.

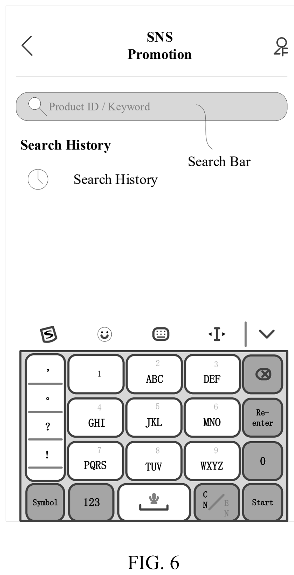

Referring to FIG. 6, a search bar may be provided on the user-facing interface, allowing users to enter a product ID or keyword to search for one or more items. Furthermore, users can then select a target item from the retrieved results. Moreover, the user-facing interface can also display historical search entries. Users can quickly select a past search query from the search history and reuse it for a new search.

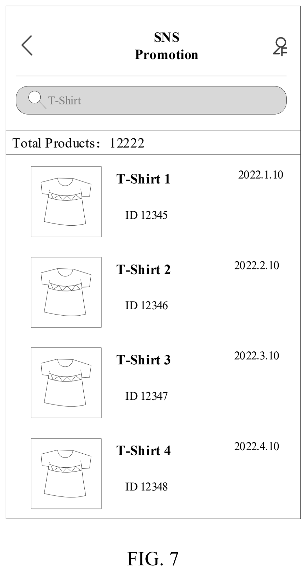

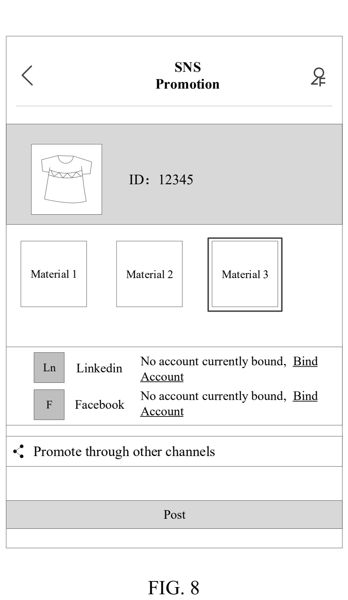

As shown in FIG. 7, assuming the user enters 'T-shirt' as a keyword in the search bar, a total of 12,222 products can be retrieved. Each of these products is identified by a unique ID. In some embodiments, based on the user's search input, the system can return product title, ID, responsible person, update time, hierarchical information (e.g., potential items, high-quality items, trending items, etc.), category information, and candidate publishing theme information within the anchor (e.g., Trending New Products, Discounts, Low-Cost Samples, etc.). The user can select one of them. For instance, if the T-shirt with ID 12345 is selected, as shown in FIG. 8, multiple candidate publishing Materials may be generated for the T-shirt with ID 12345, such as Material 1, Material 2, and Material 3 shown in the figure. Different candidate publishing Materials correspond to different publishing themes. For instance, Material 1 corresponds to Publishing Theme A, Material 2 to Publishing Theme B, and Material 3 to Publishing Theme C. Any of Publishing Themes A, B, and C may be identical to or different from the publishing themes described in previous embodiments, such as "Trending New Products,' "Low-Cost Samples,' and 'Blue Ocean Products.' Assuming the user selects Material 3, Material 3 corresponding to the T-shirt with ID 12345 is then determined as the publishing Material for the target item.

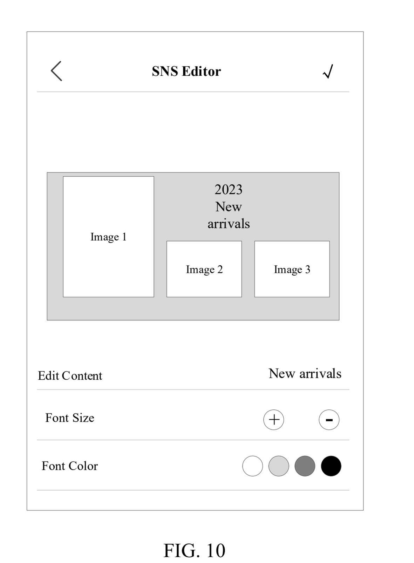

In some embodiments, in response to an editing instruction from the user client, at least one multimedia material corresponding to the target object can be edited; and a publishing material corresponding to the target object is generated based on the edited at least one multimedia material. As shown in FIG. 9, an editing control (as shown by "Edit" in the figure) can be displayed on the interface of the user client. The user can enter an editing interface by clicking the editing control. As shown in FIG. 10, the text in the publishing material can be edited, for example, by changing the size and/or color of the text in the text. In other embodiments, the pictures in the publishing material can also be edited, for example, by changing the contrast, color, style of the pictures, and/or adding watermarks to the pictures. By providing an editing function, the published publishing material better meets user needs, improving the user experience.

In step S204, the current login account (as shown by "Zhang San" in FIG. 3 to FIG. 5) can be an account pre-registered by a user of the source platform on the source platform, and the social platform account can be an account pre-registered by a user of the social platform on the social platform. The social platform may include, but is not limited to, blogs, WeChat, Weibo, Facebook, LinkedIn, etc.

After a user of the source platform logs into an account on the user client of the source platform, the user can initiate an account binding request to a server of the source platform through the user client of the source platform. The account binding request carries information of the current login account and information of the social platform account that needs to be bound with the current login account. After receiving the account binding request, the server of the source platform can redirect to an account binding page provided by the social platform. After the user of the source platform authorizes the binding request on the binding page, the current login account is successfully bound with the social platform account; otherwise, the binding fails. Furthermore, after a successful binding, the social platform can generate a token with a validity period (e.g., 3 months). If the current time is within the validity period, the binding relationship between the current login account and the social platform account is valid. If the current time exceeds the validity period, the binding relationship becomes invalid and needs to be re-bound. In this way, within the validity period of the token, the user of the source platform can directly publish the publishing material to the social platform account without logging in, reducing the cost of publishing material. Moreover, the need to re-bind after the token expires improves the security of cross-platform publishing to a certain extent.

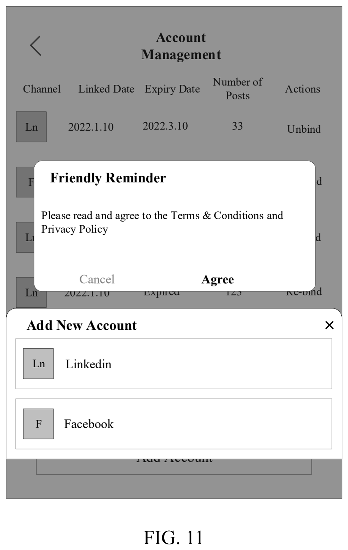

In some embodiments, if the current login account is not bound to a social platform account, a prompt message to bind a social platform account can be output through the user client. Referring to FIG. 8 and FIG. 9, one or more social platforms and their corresponding function entries can be displayed on the interface of the user client. The figure shows the case where the social platforms include both LinkedIn and Facebook. The function entries corresponding to these two social platforms are shown as "Bind Account" in the figure. By clicking the function entry of the corresponding functional platform, the user can quickly enter the binding interface corresponding to that functional platform to perform account binding. Furthermore, the interface of the user client can also provide function entries corresponding to other social platforms, as shown by "Use other methods to promote" in the figure. Through this function entry, the user can enter the binding interface of other social platform accounts to perform account binding. Referring to FIG. 11, when the user initiates an account binding request through the user client of the source platform, a viewing entry for viewing a membership agreement and a privacy policy can be displayed on the user client. If the user agrees to the membership agreement and the privacy policy, they can continue to add a social platform account for binding.

After a successful binding, the user of the source platform can also manually unbind the binding relationship between the current login account and the social platform account. After the binding relationship is unbound, the binding relationship between the current login account and the social platform account becomes invalid, and it needs to be bound again to enable the current login account to publish publishing material to the social platform account. When unbinding, the user can send an unbinding request to the server of the source platform through the user client of the source platform. The server of the source platform can, in response to the unbinding request, call an interface pre-allocated by the social platform and forward the unbinding request to the social platform through this interface, so that the social platform unbinds the binding relationship between the social platform account and the current login account of the user client of the source platform in response to the unbinding request.

In some embodiments, the current login account is one of a master account or a sub-account. One master account can include a plurality of sub-accounts, and the master account and each sub-account included in the master account can have different permissions. For example, the master account can be used to bind or unbind the following binding relationship: the binding relationship between each sub-account under this master account and a social platform account. A sub-account, however, is only used to bind or unbind the binding relationship between this sub-account and a social platform account. For example, assuming a master account is denoted as account X, and the sub-accounts included in this master account are denoted as accounts x1, x2, ..., xk (where k is a positive integer), and each sub-account can be bound with at least one social platform account, then account X can bind or unbind account x1 with social platform account Y1, bind or unbind account x2 with social platform account Y2, ..., and bind or unbind account xk with social platform account Yk. Account xi (1≤i≤k), however, can only establish or unbind the binding relationship between account xi and a social platform account.

In some embodiments, the master account and each sub-account included in the master account can all view the binding relationships between each sub-account under that master account and social platform accounts. For example, the aforementioned account x1 can view the binding relationship of each of the accounts x1, x2, ..., xk with a social platform account. In other embodiments, permissions for a sub-account can also be set, such that the binding relationship of the set sub-account with a social platform account can only be viewed by the master account to which the sub-account belongs and/or by specific sub-accounts.

In step S206, the social platform can pre-open a call interface for the source platform. If the current login account is successfully bound with the social platform account and the binding relationship is valid, the source platform can publish the publishing material corresponding to the target object to the social platform by calling the call interface opened by the social platform.

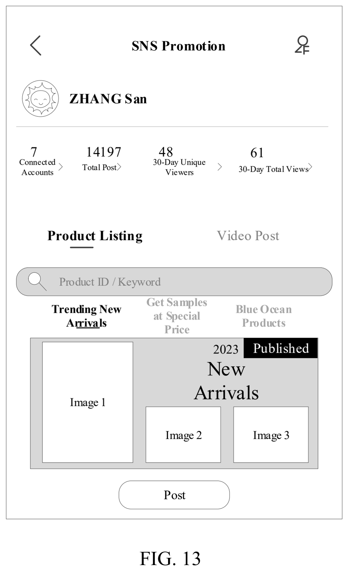

In some embodiments, the source platform can pre-review a target object uploaded by a user to the source platform. After the review is passed, the target object is published to the source platform. The user of the source platform can call the call interface opened by the social platform in the manner described above to publish the publishing material corresponding to the reviewed and approved target object to a social platform account. Furthermore, the social platform can also review the publishing material corresponding to the target object before publishing. Only after the social platform's review is passed is the publishing material corresponding to the target object published to the social platform account. Otherwise, the social platform can return a prompt message to the source platform, used to prompt that the publishing of the publishing material corresponding to the target object has failed. Referring to FIG. 13, after successfully publishing the publishing material corresponding to the target object to the social platform account, the publishing material corresponding to the target object can be marked with a "Published" status on the user client, and a "Publishing successful" prompt can also be displayed on the user client.

In some embodiments, the current login account of the user client of the source platform is bound to one or more objects to be published. The user of the source platform can only publish the publishing material corresponding to a target object bound to the current login account to a social platform account bound to the current login account. For example, the current login account is an account xi pre-registered by a merchant on an e-commerce platform, and this account xi is bound to a product S sold by the merchant on the e-commerce platform. On this basis, the merchant can only publish the publishing material corresponding to the product S sold in this merchant's store to a social platform account bound to the account xi. If a product Q is not a product sold by the merchant, then the product Q is not bound to the merchant's current login account xi, and thus the merchant cannot publish the publishing material of the product Q to a social platform account bound to the account xi while logged into the current login account xi.

In some embodiments, after the user client logs into the current login account, only information corresponding to the target object bound to the current login account is displayed on the user client. And when the user searches for a target object using search information, only the target object bound to the current login account can be found. This way, after the user client logs into the current login account, it is only possible to publish the publishing material corresponding to the target object bound to the current login account to a social platform account. Through the above method, the publishing permissions of the current login account can be restricted, improving the security of cross-platform publishing.

In some embodiments, the number of social platform accounts bound to the current login account of the user client is greater than 1. The source platform can, in response to the publishing request, publish the publishing material corresponding to the target object to a plurality of social platform accounts bound to the current login account, respectively. Specifically, the user can select a plurality of social platform accounts from a list of social platform accounts bound to the current login account through the user client, and send a publishing request carrying information of the selected plurality of social platform accounts to the source platform. The source platform can, in response to the publishing request, publish the publishing material corresponding to the target object to the plurality of social platform accounts bound to the current login account, respectively.

For example, the social platform accounts bound to the current login account of the user client include account Y1 on the LinkedIn platform and account Y2 on the Facebook platform. Then, the user only needs to send one publishing request through the user client, and the source platform can send the publishing material corresponding to the target object to both social platform accounts Y1 and Y2, respectively. In this way, the user does not need to log into different social platforms multiple times, which reduces the operational complexity during multi-social platform publishing and improves the publishing efficiency during multi-social platform publishing. In practical applications, when a user logs into some social platforms, it is necessary to configure the current network of the user client, which further increases the cost of publishing material. By using the method of the embodiments of the present disclosure, the user does not need to log into the social platform when publishing the publishing material, and thus does not need to perform network configuration, further reducing the cost of publishing material.

Furthermore, to facilitate user operation, the social platform accounts can be displayed respectively on the user client according to the social platform to which each social platform account belongs. For example, one or more social platform accounts of the Facebook platform can be displayed in a first area of the user client, and one or more social platform accounts of the LinkedIn platform can be displayed in a second area of the user client.

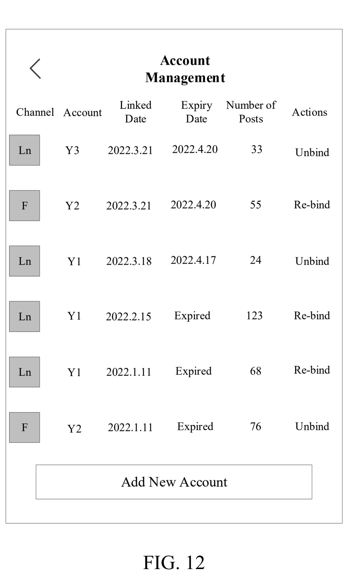

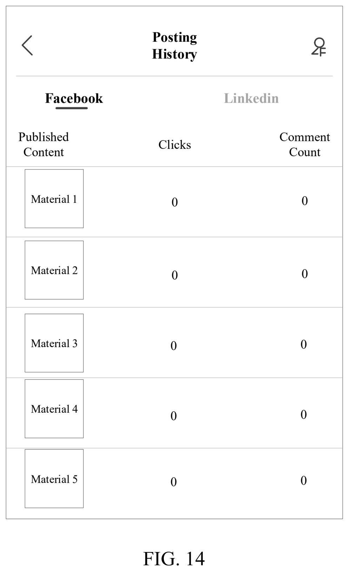

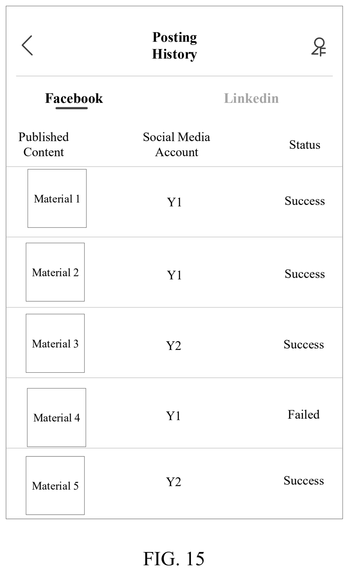

In some embodiments, the source platform can also send at least one of the following types of information to the user client for display:
(1) Information of social platform accounts historically bound to the current login account. Referring to FIG. 12, this can include at least one of an account name of a historically bound social platform account (as shown by Y1, Y2, Y3 in the figure), a social platform to which it belongs (e.g., LinkedIn and Facebook, as shown by Ln and F respectively in the figure), a binding time, an expiration time, a publishing quantity, a function entry (a function entry for unbinding or a function entry for re-binding), etc. Referring to FIG. 13, it can also include a quantity of social platform accounts bound to the current login account (referred to as the number of bound accounts, which is 7 in FIG. 13), and a total publishing quantity of all social platform accounts historically bound to the current login account (the total publishing quantity shown in FIG. 13 is 14197).
(2) Information of historical publishing materials of the current login account. The historical publishing materials can include publishing materials published by the current login account to social platform accounts within a preset historical time period (e.g., the last week, the last month, or the last 3 months, etc.). The information of the historical publishing materials can include, but is not limited to, at least one of an ID of a target object corresponding to the historical publishing material, a publishing time of the historical publishing material, a social platform account to which the historical publishing material was published, a social platform to which the social platform account that the historical publishing material was published to belongs, etc.
(3) Interaction information received by each social platform account bound to the current login account for the publishing material of the target object, which can specifically be interaction information within a preset historical time period (e.g., the last week, the last 30 days, the last 3 months, etc.). Referring to FIG. 13, this includes the number of viewers in the last 30 days and the number of views in the last 30 days. Referring to FIG. 14, this includes the number of clicks and the number of comments. In addition, the interaction information can also include at least one of the number of likes, the number of forwards, or the number of people who forwarded within the preset historical time period. Furthermore, the social platform can forward the interaction information to the source platform when the interaction information meets a preset condition, so that the source platform can send the interaction information to the user client for display. The preset condition can be that a number of interactions (e.g., number of likes) is greater than a preset number threshold or a number of interacting people (e.g., number of viewers) is greater than a preset number threshold, or other conditions.
(4) A publishing status of historical publishing materials published by the current login account to each social platform account, including a successful publishing status and a failed publishing status. A publishing failure may be caused by poor network quality, the social platform not passing the review of the publishing material, etc. FIG. 15 shows the publishing status of a plurality of historical publishing materials published by the current login account to the Facebook platform. Among them, Material 1 and Material 2 under social platform account Y1, and Material 3 and Material 5 published to social platform account Y2 were all published successfully. Material 4 published to social platform account Y1 failed to publish.
(5) Content of the publishing material, as shown by the publishing material marked with the "Published" status in FIG. 13, which can include pictures and text information.
(6) Information of the current login account, which can include a name and a category (master account or sub-account) of the current login account.

The publishing method of the above embodiments can be used for Social Networking Services (SNS) marketing. SNS is a new type of social media marketing technology that combines social networking technology with brand promotion. A social network is a multilateral platform, including network tools for interaction and marketing such as blogs, WeChat, Weibo, Facebook, etc. SNS marketing can use social networks to communicate with consumers, and brands and consumers can use interactive networks to publish information about brands. It can also build brand image, increase consumers' purchase motivation, attract potential customers, establish brand influence, and increase brand share. Users of an e-commerce platform can publish information about products to various social platforms through a current login account, thereby achieving brand promotion.

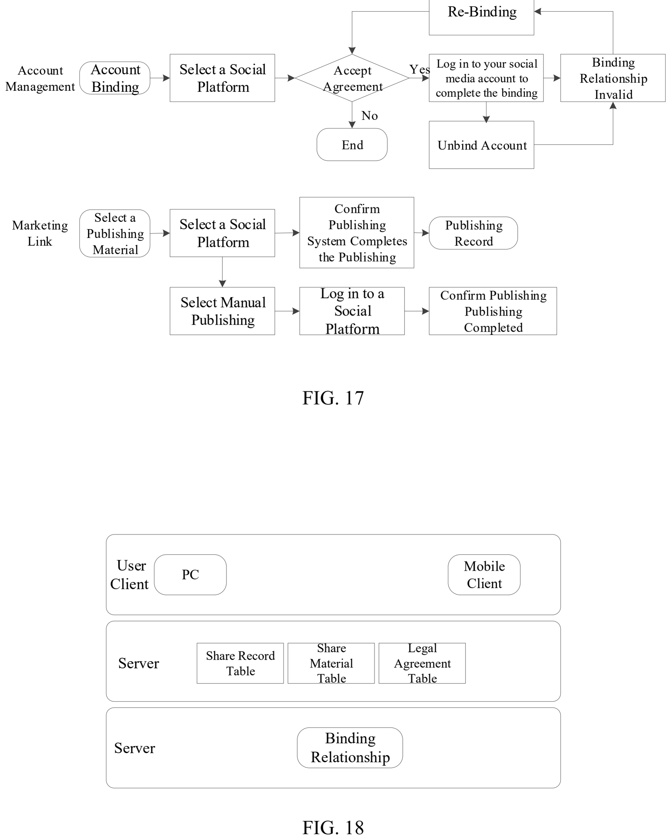

FIG. 17 shows an overall flowchart of an embodiment of the present disclosure, including two parts: account management and marketing link. In account management, a user can enter an account binding function entry, select a social platform, and choose whether to agree to an agreement. If yes, the user logs into the social platform account to complete the account binding; otherwise, the process ends. After binding, if the account is manually unbound, or the binding validity period expires, the binding relationship becomes invalid. In the case of an invalid binding relationship, it can be bound again. In the marketing link, the user can select a publishing material and a social platform, and confirm publishing, whereby the system completes the publishing and generates a publishing record. The user can also use a traditional publishing method, that is, select manual publishing and log into the social platform, and after confirming publishing, the publishing is completed.

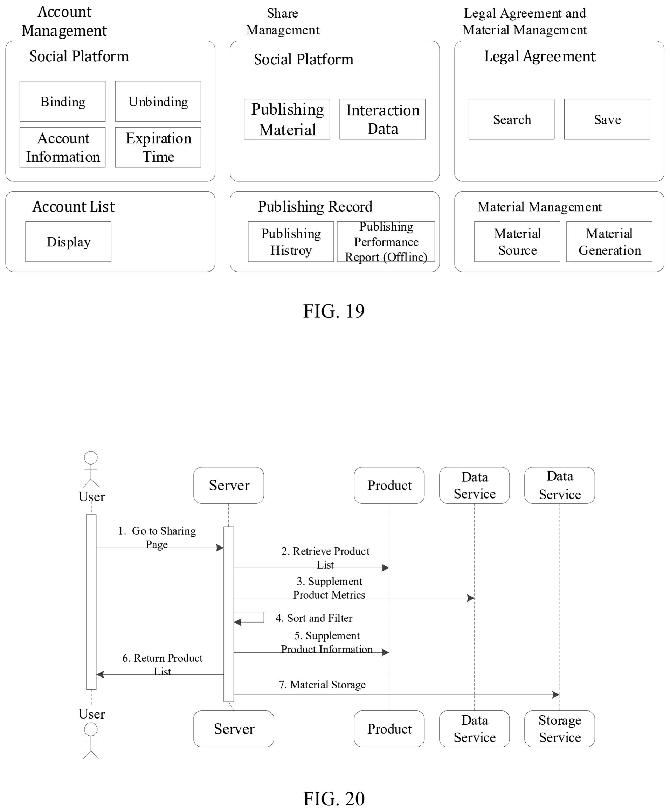

FIG. 18 and FIG. 19 show schematic diagrams of functional modules of an embodiment of the present disclosure. As shown in FIG. 18, the user client of this embodiment of the present disclosure can be a PC client or a mobile client. The user client can interact with a server. The server can store a publishing record table (for recording the publishing time of historical publishing materials, the social platform account that published the historical publishing materials, etc.), a publishing material table (for recording the content of historical publishing materials), and a legal agreement table (for recording a membership agreement and a privacy policy), and record the binding relationship between the current login account of the source platform and a social platform account.

FIG. 19 shows more specific functional modules of the source platform. The functions implemented by the source platform mainly include account management, publishing management, and legal agreement and material management. The account management function is used to implement the binding and unbinding of the current login account of the source platform with a social platform account, and to record account information of the social platform account bound to the current login account (e.g., account name, belonging social platform, etc.) and the expiration time of the binding relationship, and is used to send the above information to a client for display. The publishing management function is used to implement the publishing of publishing material on a social platform, obtain interaction data from the social platform account, and record publishing history and perform offline statistics on publishing data. The legal agreement and material management function is used to save and query legal agreements, as well as manage material sources (multimedia material uploaded by users) and material generation (generating publishing material for a target object based on multimedia material).

FIG. 20, taking an e-commerce platform as the source platform and a product as the target object as an example, shows a schematic diagram of a preparation process of a publishing material. The preparation process specifically includes the following steps:
1. A user visits a publishing page.
2. A server obtains a product list.
3. The server supplements product indicators, for example, a product's launch time, discount information, etc., and determines the products to be published to be displayed under each candidate publishing theme according to the obtained product indicators.
4. The server sorts and truncates the products to be published displayed under each candidate publishing theme.
5. The server supplements product information, for example, product pictures, product text information, and generates a publishing material.
6. The server returns the product list displayed under each candidate publishing theme.
7. The server stores the publishing material.

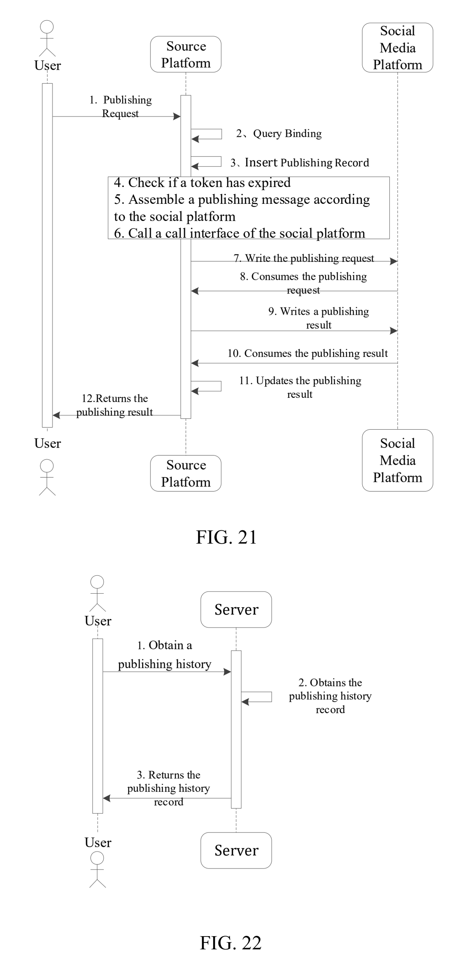

FIG. 21 shows a schematic diagram of an interaction process between a source platform and a social platform. It specifically includes the following steps:
1. A user sends a publishing request to the source platform.
2. The source platform queries a binding relationship between a current login account and a social platform account.
3. If a binding relationship exists, a publishing record is inserted in the source platform.
4. Check if a token has expired.
5. If the token has not expired, assemble a publishing message according to the social platform.
6. Call a call interface of the social platform.
7. Write the publishing request to the social platform.
8. The social platform consumes the publishing request.
9. The source platform writes a publishing result to the social platform.
10. The social platform consumes the publishing result.
11. The source platform updates the publishing result.
12. The source platform returns the publishing result to the user.

FIG. 22 shows a flowchart for obtaining a publishing record, including the following steps:
1. A user submits a request to a server of a source platform to obtain a publishing history record. The publishing history record is used to record information of historical publishing materials, for example, publishing time, published social platform account, publishing status (successful or failed), etc.
2. The server of the source platform obtains the publishing history record stored on this platform.
3. The server of the source platform returns the publishing history record to the user.

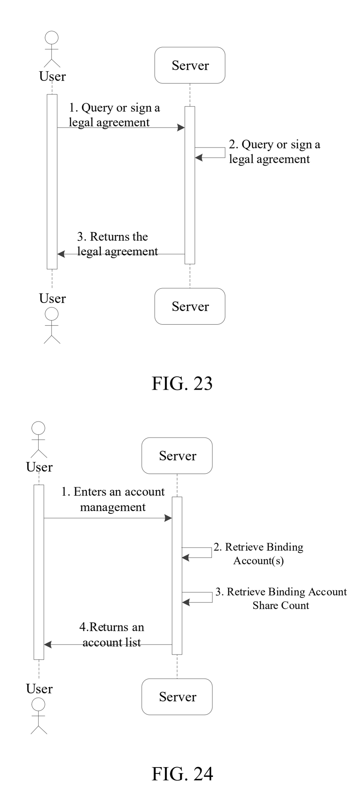

FIG. 23 shows a schematic diagram of a query and signing process for a legal agreement, including the following steps:
1. A user submits a request to a server of a source platform to query or sign a legal agreement.
2. The server of the source platform obtains the legal agreement stored on this platform.
3. The server of the source platform returns the legal agreement to the user.

FIG. 24 shows a schematic diagram of a query process for a bound account, including the following steps:
1. A user enters an account management interface.
2. A server of a source platform obtains social platform accounts bound to a current login account.
3. The server of the source platform obtains a publishing quantity for each social platform account bound to the current login account.
4. The server of the source platform returns an account list to the user. The list includes information of the social platform accounts bound to the current login account and the publishing quantity for each social platform account bound to the current login account.

An embodiment of the present disclosure also provides a computer device, which at least includes a memory, a processor, and a computer program stored on the memory and executable by the processor, wherein the processor, when executing the program, implements the method according to any of the foregoing embodiments.

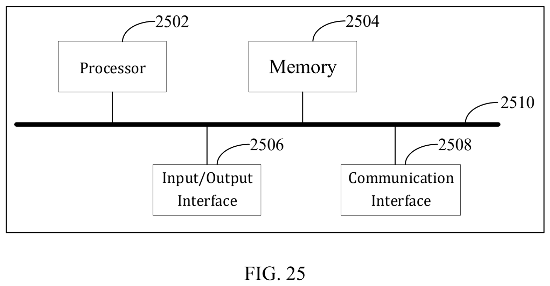

FIG. 25 shows a schematic diagram of a more specific hardware structure of a computer device provided by an embodiment of the present disclosure. The device may include: a processor 2502, a memory 2504, an input/output interface 2506, a communication interface 2508, and a bus 2510. The processor 2502, the memory 2504, the input/output interface 2506, and the communication interface 2508 achieve communication connections with each other within the device through the bus 2510.

The processor 2502 may be implemented by a general-purpose Central Processing Unit (CPU), a microprocessor, an Application Specific Integrated Circuit (ASIC), or one or more integrated circuits, etc., for executing relevant programs to implement the technical solutions provided by the embodiments of the present disclosure. The processor 2502 may also include a graphics card, which may be an Nvidia Titan X graphics card or a 10120Ti graphics card, etc.

The memory 2504 may be implemented in the form of a Read Only Memory (ROM), a Random Access Memory (RAM), a static storage device, a dynamic storage device, etc. The memory 2504 can store an operating system and other application programs. When the technical solutions provided by the embodiments of the present disclosure are implemented by software or firmware, the relevant program code is saved in the memory 2504 and is called and executed by the processor 2502.

The input/output interface 2506 is used to connect an input/output module to achieve information input and output. The input/output module can be configured as a component in the device (not shown in the figure), or can be externally connected to the device to provide corresponding functions. The input device can include a keyboard, a mouse, a touch screen, a microphone, various sensors, etc. The output device can include a display, a speaker, a vibrator, an indicator light, etc.

The communication interface 2508 is used to connect a communication module (not shown in the figure) to achieve communication interaction between this device and other devices. The communication module can achieve communication through a wired method (e.g., USB, network cable, etc.), or through a wireless method (e.g., mobile network, WIFI, Bluetooth, etc.).

The bus 2510 includes a path that transmits information between the various components of the device (e.g., the processor 2502, the memory 2504, the input/output interface 2506, and the communication interface 2508).

It should be noted that although the above device only shows the processor 2502, the memory 2504, the input/output interface 2506, the communication interface 2508, and the bus 2510, in a specific implementation process, the device may also include other components necessary for normal operation. In addition, a person skilled in the art can understand that the above device may also only include the components necessary to implement the solutions of the embodiments of the present disclosure, and does not necessarily need to include all the components shown in the figure.

An embodiment of the present disclosure also provides a computer-readable storage medium, on which a computer program is stored, wherein the program, when executed by a processor, implements the method according to any of the foregoing embodiments.

The computer-readable medium includes permanent and non-permanent, removable and non-removable media, and information storage can be implemented by any method or technology. The information can be computer-readable instructions, data structures, program modules, or other data. Examples of computer storage media include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other non-transitory medium that can be used to store information that can be accessed by a computing device. As defined herein, computer-readable media do not include transitory computer-readable media, such as modulated data signals and carrier waves.

From the description of the above embodiments, a person skilled in the art can clearly understand that the embodiments of the present disclosure can be implemented by means of software plus a necessary general-purpose hardware platform. Based on this understanding, the technical solution of the embodiments of the present disclosure, in essence or the part that contributes to the prior art, can be embodied in the form of a software product. The computer software product can be stored in a storage medium, such as ROM/RAM, a magnetic disk, an optical disc, etc., and includes several instructions to cause a computer device (which can be a personal computer, a server, or a network device, etc.) to execute the methods described in the various embodiments of the present disclosure or certain parts of the embodiments.

The systems, apparatuses, modules, or units illustrated in the above embodiments can be specifically implemented by a computer device or entity, or by a product with a certain function. A typical implementation device is a computer. The specific form of the computer can be a personal computer, a laptop computer, a cellular phone, a camera phone, a smart phone, a personal digital assistant, a media player, a navigation device, an email sending and receiving device, a game console, a tablet computer, a wearable device, or a combination of any of these devices.

The various embodiments in the present disclosure are described in a progressive manner. The same or similar parts between the various embodiments can be referred to each other. Each embodiment focuses on the differences from other embodiments. In particular, for the device embodiments, since they are basically similar to the method embodiments, the description is relatively simple, and for relevant parts, reference can be made to the description of the method embodiments. The device embodiments described above are merely schematic. The modules described as separate components may or may not be physically separate. The functions of the modules can be implemented in the same or multiple software and/or hardware when implementing the solutions of the embodiments of the present disclosure. Some or all of the modules can also be selected according to actual needs to achieve the purpose of the solutions of the embodiments. A person of ordinary skill in the art can understand and implement them without creative effort.

The above are only specific embodiments of the present disclosure. It should be pointed out that for a person of ordinary skill in the art, several improvements and modifications can be made without departing from the principle of the embodiments of the present disclosure, and these improvements and modifications should also be regarded as the protection scope of the embodiments of the present disclosure.

## Claims

1. An object publishing method, the method comprising:
receiving a publishing request for a publishing material corresponding to a target object, wherein the publishing request is sent by a user client of a source platform where the target object is located; wherein the publishing material corresponding to the target object is obtained by combining at least one multimedia material according to a preset template, the at least one multimedia material corresponds to the target object, and the preset template is determined based on a publishing theme corresponding to the target object;
obtaining a social platform account bound to a current login account of the user client; and
in response to the publishing request, publishing the publishing material corresponding to the target object to the social platform account.

2. The method according to claim 1, wherein an interface of the user client displays at least one candidate publishing theme, a publishing material corresponding to at least one object to be published is displayed under each candidate publishing theme, the target object is selected from the at least one object to be published, and the publishing material corresponding to the target object is a publishing material corresponding to the selected object to be published.

3. The method according to claim 2, wherein the publishing material corresponding to the object to be published is displayed under the corresponding candidate publishing theme based on information of the object to be published, and the information of the object to be published includes at least one of the following:
a launch time of the object to be published on the source platform;
discount information of the object to be published; or
category information of the object to be published.

4. The method according to claim 2, the method further comprising:
searching for the target object based on search information sent by the user client;
if a publishing material corresponding to the searched target object is not included in any candidate publishing theme, generating a plurality of candidate publishing materials for the target object, wherein different candidate publishing materials correspond to different publishing themes; and
determining a candidate publishing material selected by the user client as the publishing material corresponding to the target object.

5. The method according to claim 1, wherein the at least one multimedia material includes a first multimedia material and a second multimedia material;
the first multimedia material is a multimedia material pre-uploaded by the user client; and
the second multimedia material is generated based on preset information, wherein the preset information includes at least one of the following:
the publishing theme corresponding to the target object, a current time, or location information of the user client.

6. The method according to claim 1, wherein before publishing the publishing material corresponding to the target object to the social platform account, the method further comprises:
in response to an editing instruction from the user client, editing the at least one multimedia material; and
generating the publishing material corresponding to the target object based on the edited at least one multimedia material.

7. The method according to claim 1, wherein a quantity of social platform accounts bound to the current login account of the user client is greater than 1; and the publishing the publishing material corresponding to the target object to the social platform account in response to the publishing request comprises:
in response to the publishing request, publishing the publishing material corresponding to the target object to a plurality of social platform accounts bound to the current login account.

8. The method according to claim 1, the method further comprising:
sending at least one of the following types of information to the user client for display: information of historical publishing materials of the current login account; information of social platform accounts historically bound to the current login account;
or
interaction information received by the social platform account for the publishing material of the target object.

9. The method according to claim 1, the method further comprising:
unbinding a binding relationship between the current login account and the social platform account.

10. The method according to claim 1, wherein the current login account is one of a master account or a sub-account;
the master account is configured to bind or unbind the following binding relationship: a binding relationship between each sub-account under the master account and a social platform account; and
the sub-account is configured to bind or unbind a binding relationship between the sub-account and a social platform account.

11. The method according to claim 1, the method further comprising:
if the current login account is not bound to a social platform account, outputting a prompt message to bind a social platform account through the user client.

12. A computer-readable storage medium, having a computer program stored thereon, wherein the program, when executed by a processor, implements the method according to any one of claims 1 to 11.

13. A computer device, comprising a memory, a processor, and a computer program stored on the memory and executable on the processor, wherein the processor, when executing the program, implements the method according to any one of claims 1 to 11.
